# EUROPÄISCHE PATENTSCHRIFT

(11) **EP 1 576 410 B1**
(45) Veröffentlichungstag und Bekanntmachung des Hinweises auf die Patenterteilung: **31.03.2010**
(21) Anmeldenummer: 03782367.1
(22) Anmeldetag: 11.12.2003
(51) Int. Cl.: G02C 5/22

(54) **FEDERSCHARNIER**
SPRING HINGE
CHARNIERE A RESSORT

(30) Priorität: 19.12.2002 DE 10261765
(43) Veröffentlichungstag der Anmeldung: 21.09.2005
(73) Patentinhaber: OBE Ohnmacht & Baumgärtner GmbH & Co. KG, 75228 Ispringen (DE)
(72) Erfinder: FIEHN, Jörg, 75239 Eisingen (DE)
(74) Vertreter: Gleiss, Alf-Olav
(86) Internationale Anmeldenummer: PCT/EP2003/014049
(87) Internationale Veröffentlichungsnummer: WO 2004/057409

(56) Entgegenhaltungen:
- EP-A- 0 652 456
- WO-A-02/099512
- WO-A-03/071338
- WO-A1-98/43127
- DE-A- 19 511 167
- DE-A1- 19 856 117
- DE-U- 9 114 917
- US-B1- 6 336 251

## Beschreibung

Die Erfindung betrifft ein Federscharnier für Brillen gemäß Oberbegriff des Anspruchs 1.

Federscharniere der hier angesprochenen Art sind bekannt. Sie dienen dazu, Bügel mit einem Brillengläser umfassenden Mittelteil einer Brille nachgiebig federnd zu verbinden. Die Federschamiere bewirken, dass die Bügel mit einer vorgebbaren Kraft an den Kopf eines Trägers der Brille angelegt werden. Die Bügel können aus einer ersten Funktionsstellung, in der diese am Mittelteil anliegen, in eine zweite Funktionsstellung verschwenkt werden, in der diese etwa rechtwinklig zum Mittelteil angeordnet sind. Werden die Bügel über die zweite Funktionsstellung hinaus nach außen verschwenkt, wird ein Federelement im Federscharnier aktiviert, das die Bügel in die zweite Funktionsstellung zurück zieht, so dass die Brille sicher gehalten wird.

Das Federelement ist im Inneren eines Gehäuses des Federscharniers untergebracht, nämlich in einer Ausnehmung im Gehäuse, die auch ein Scharnierelement aufnimmt, das von einem Sperrkörper im Gehäuse gehalten wird.

Es ist bekannt, den Sperrkörper mit einer Schraube im Inneren des Gehäuses zu fixieren. Angesichts der Miniaturisierung der Federscharniere werden die Schrauben immer kleiner, so dass deren Handhabung immer aufwendiger wird. In der Europäischen Patentschrift EP 0652456 A wird vorgeschlagen, die Schrauben durch eine Sicke zu ersetzen, durch die der Sperrkörper im Inneren des Gehäuses verankert wird. Die Sicke greift in eine Ringnut ein, die in den Grundkörper des Sperrkörpers eingebracht ist. Dies bewirkt zwar eine axiale Verankerung des Sperrkörpers, so dass das Scharnierelement nicht aus dem Inneren des Gehäuses herausgezogen werden kann. Es bedarf jedoch einer zusätzlichen Sicherung gegen ein Verdrehen des Scharnierelements im Gehäuse. Dies führt zu einem relativ aufwendigen Aufbau des Federschamiers.

Aufgabe der Erfindung ist es daher, ein Federschanier der eingangs genannten Art zu schaffen, das einfach aufgebaut ist und diesen Nachteil nicht aufweist.

Zur Lösung dieser Aufgabe wird ein Federscharnier vorgeschlagen, das die in Anspruch 1 genannten Merkmale aufweist. Der Sperrkörper dieses Federschamiers weist einen Aufnahmebereich auf und das Gehäuse einen Verformungsbereich. Dieser ist in den Aufnahmebereich des Sperrkörpers verlagerbar. Das Federscharnier zeichnet sich dadurch aus, dass der Aufnahmebereich so ausgebildet ist, dass ein Verdrehen und ein Herausziehen des Sperrkörpers aus der Ausnehmung verhindert werden. Es wird hier also eine Doppelwirkung erreicht, die eine sichere Verankerung des Scharnierelements im Gehäuse des Federschamiers ermöglicht, ohne dass es irgendweicher zusätzlichen Maßnahmen bedürfte. Darüber hinaus wird durch den Verformungsbereich der Einsatz von Schrauben unnötig, was den Zusammenbau des Federscharniers wesentlich vereinfacht.

Bevorzugt wird ein Ausführungsbeispiel des Federscharniers, das sich dadurch auszeichnet, dass der Verformungsbereich durch mindestens einen Wandbereich des Gehäuses gebildet wird, der mittels eines Werkzeugs plastisch verformbar ist. Damit ist ein Zusammenfügen der Teile des Federscharniers besonders einfach möglich.

Bevorzugt wird weiterhin ein Ausführungsbeispiel des Federscharniers, das sich dadurch auszeichnet, dass der Wandbereich geschlossen ist. Dies hat den Vorteil, dass keine Verunreinigungen in das Innere des Gehäuses des Federschamiers gelangen können, die zu einem Verschleiß und zu Funktionsstörungen führen könnten.

Bevorzugt wird weiterhin ein Ausführungsbeispiel, das sich dadurch auszeichnet, dass der Verformungsbereich zwei plastisch verformbare Wandbereiche des Gehäuses umfasst. Es ist also möglich, das Federscharnier variabel zu gestalten und die Anwahl der Verformungsbereiche beispielsweise an unterschiedliche Belastungsfälle des Federscharniers anzupassen.

Bevorzugt wird außerdem ein Ausführungsbeispiel des Federscharniers, das sich dadurch auszeichnet, dass der plastisch verformbare Wandbereich des Gehäuses dünner ist als dessen übrige Wandung.
Damit lassen sich die Verformungskräfte einstellen und auf ein Minimum reduzieren. Dies hat zur Folge, dass eine Verformung des übrigen Federschamiers praktisch ausgeschlossen werden kann.

Ein weiteres bevorzugtes Ausführungsbeispiel des Federscharniers zeichnet sich dadurch aus, dass der Aufnahmebereich im Sperrkörper mindestens eine in den Grundkörper des Sperrkörpers einbringbare Senke aufweist, in die der Verformungsbereich eingreift. Diese Ausgestaltung begrenzt den Bewegungsbereich bei der Verlagerung des Verformungsbereichs und gibt damit die Möglichkeit, einen definierten Montagezustand zu gewährleisten. Darüber hinaus kann der Verformungsbereich nicht ohne weiteres mit dem Werkzeug durchstoßen werden.

Bevorzugt wird außerdem ein Ausführungsbeispiel des Federscharniers, das sich dadurch auszeichnet, dass der Aufnahmebereich mindestens einen in den Grundkörper des Sperrkörpers einbringbaren Ausschnitt aufweist, der den Verformungsbereich an mindestens drei Seiten umfasst. Der Sperrkörper kann auf unterschiedliche Weise realisiert werden, beispielsweise Führungsarme aufweisen. Es ist möglich, den Verformungsbereich zwischen die Führungsarme zu legen, die damit an zwei Seiten am Verformungsbereich anliegen und damit eine Rotation des Sperrkörpers innerhalb des Gehäuses des Federscharniers verhindern. Ein weiterer Bereich des Ausschnitts liegt an dem Verformungsbereich an und stellt sicher, dass der Sperrkörper und damit das Scharnierelement nicht aus dem Gehäuse herausgezogen werden können.

Weitere Ausgestaltungen ergeben sich aus den übrigen Unteransprüchen.

Die Erfindung wird im Folgenden anhand der Zeichnungen näher erläutert. Es zeigen:
- Figur 1: einen Längsschnitt durch ein erstes Ausführungsbeispiel eines Federscharniers;
- Figur 2: einen Querschnitt entlang der Linie II-II durch das in Figur 1 dargestellte Federscharnier ohne Scharnierteil;
- Figur 3: einen Querschnitt durch das in Figur 1 dargestellte Federscharnier mit Scharnierteil;
- Figuren 4 bis 8: Längsschnitte durch weitere Ausführungsbeispiele eines Federscharniers;
- Figur 9: einen entlang einer horizontalen Ebene geführten Längsschnitt durch ein weiteres Ausführungsbeispiel eines Federscharniers;
- Figuren 10: und 11 perspektivische Ansichten unterschiedlicher Sperrkörper;
- Figur 12: einen Längsschnitt durch den in Figur 11 wiedergegebenen Sperrkörper;
- Figuren 13a: und 13b perspektivische Ansichten weiterer Ausführungsbeispiele eines Sperrkörpers;
- Figur 14: einen Längsschnitt durch ein weiteres Ausführungsbeispiel eines Sperrkörpers:
- Figur 15a: eine perspektivische Ansicht eines weiteren Ausführungsbeispiels eines Sperrkörpers;
- Figur 15b: ein weiteres Ausführungsbeispiel eines Sperrkörpers in perspektivischer Ansicht;
- Figur 16: eine Explosionsdarstellung eines Federscharniers mit einem zugehörigen Brillenbügel;
- Figur 17: eine Explosionsdarstellung eines Federschamiers mit einem Sperrkörper ähnlich dem in Figur 15b gezeigten;
- Figur 18: das Federscharnier nach Figur 17 mit einer vormontierten Baugruppe und
- Figur 19: einen Längsschnitt durch das zusammengebaute Federschamier.

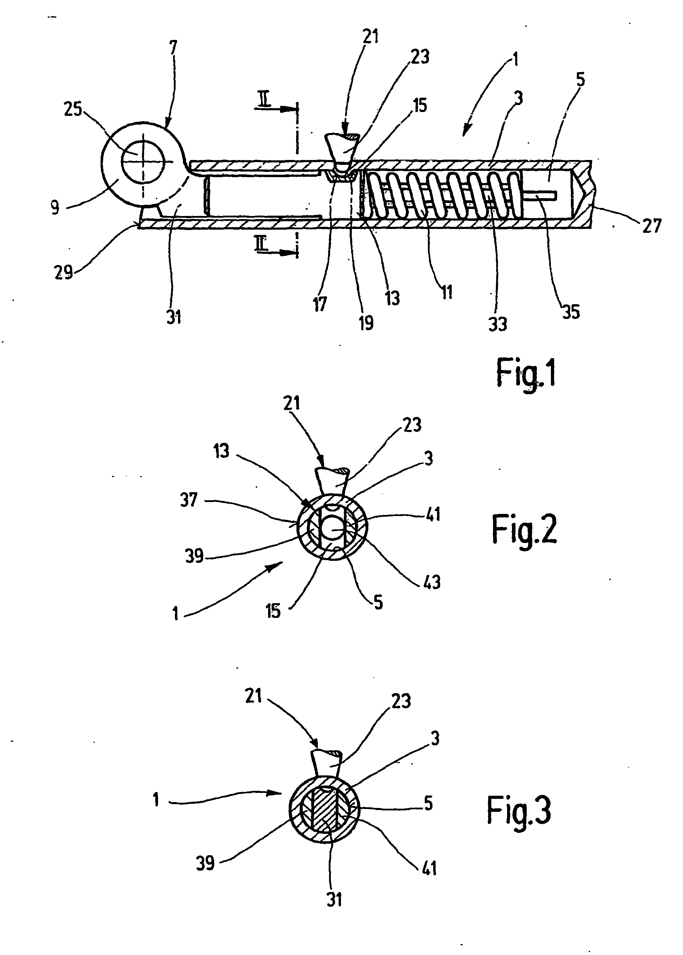

Figur 1 zeigt einen Längsschnitt durch ein Federscharnier 1 mit einem Gehäuse 3, welches eine Ausnehmung 5 einschließt. In diese sind ein Scharnierelement 7 mit einem Schamierauge 9, ein hier als Schraubenfeder ausgebildetes Federelement 11 und ein auch als Führungs- und Verschlussteil bezeichneten Sperrkörper 13 untergebracht. Dieser ist zum Teil geschnitten dargestellt, so dass ein in den Grundkörper 15 des Sperrkörpers eingebrachter Aufnahmebereich 17 ersichtlich ist, in den ein Verformungsbereich 19 des Gehäuses 3 verlagert ist. Es ist hier auch ein Werkzeug 21 angedeutet, das einen Dom 23 umfasst.

Bei dem hier dargestellten Ausführungsbeispiel ist der Aufnahmebereich 17 als in den Grundkörper 15 des Sperrkörpers 13 ausgebildete Senke realisiert, in die der Verformungsbereich 19 eingreift. Damit wird der Sperrkörper 13 so in der Ausnehmung 5 gehalten, dass dieser zum Einen axial gesichert ist und andererseits eine Verdrehung des Sperrkörpers 13 gegenüber dem Gehäuse 3 ausgeschlossen ist.

Der Grundaufbau eines Federschamiers 1 der hier angesprochenen Art ist bekannt, so dass hier nur kurz darauf eingegangen wird: Das Federscharnier 1 ist über das Scharnierauge 9 mit einem hier nicht dargestellten Schamierteil verbindbar, das seinerseits mindestens ein Schamierauge aufweist. Es sind Federschamiere bekannt, bei denen das Scharnierelement 7 zwei in einem Abstand zueinander angeordnete Scharnieraugen aufweist. Das hier dargestellte Ausführungsbeispiel ist mit einem Schamierauge 9 versehen, das beispielsweise mit zwei in einem Abstand zueinander angeordneten Schamieraugen des Scharnierteils zusammenwirkt, wobei eine Schraube die Durchgangsöffnung 25 des Schamierauges 9 und entsprechende Durchgangsöffnungen in dem oder den Schamieraugen des Scharnierteils durchgreift.

Bei der hier gewählten Darstellung wird davon ausgegangen, dass das Gehäuse 3 Teil eines Bügels 27 ist, der über das hier nicht dargestellte Schamierteil mit einem Mittelteil einer Brille verbunden ist. Der Bügel 27 kann gegenüber dem Mittelteil aus einer ersten Funktionsstellung, in der der Bügel 27 am Mittelteil anliegt, in eine zweite Funktionsstellung verlagert werden, in der der Bügel 27 etwa senkrecht zum Mittelteil der Brille steht. In dieser Funktionsstellung liegt die Vorderseite 29 des Gehäuses 3, hier also auch des Brillenbügels 27, an dem Schamierteil beziehungsweise dem Mittelteil der Brille an. Wird der Bügel im Uhrzeigersinn weiter verschwenkt, so wird das Scharnierelement 7 gegen die Kraft des Federelements 11 aus der Ausnehmung 5 des Gehäuses 3 herausgezogen, wobei das Federelement 11 komprimiert wird. Dies führt zu einer Rückstellkraft, die den Bügel 27 in seine zweite Funktionsstellung zurück verlagert und damit den Brillenbügel mit einer Vorspannkraft an den Kopf eines Brillenträgers anlegt.

Das Scharnierelement 7 weist einen sich an das Scharnierauge 9 anschließenden Führungsbereich 31 auf, der den Sperrkörper 13 durchgreift und in einen Stift 33 übergeht, der hier das Federelement 11 durchdringt. An dem dem Führungsbereich 31 gegenüberliegenden Ende des Stifts ist eine als Abflachung ausgebildetes Widerlager 35 für das Federelement 11 gegeben, das sich mit seinem rechten Ende am Widerlager 35 und mit seinem linken Ende am Sperrkörper 13 abstützt.

Figur 2 zeigt einen Querschnitt durch das Gehäuse 3 entlang der Linie II-II. Gleiche Teile sind mit gleichen Bezugsziffern versehen, so dass insofern auf die Erläuterungen zu Figur 1 verwiesen wird.

Die Schnittdarstellung gemäß Figur 2 zeigt, dass die Außenfläche 37 des Gehäuses 3 und damit des Bügels 27 in diesem Bereich kreiszylindrisch ausgebildet sind. Entsprechend ist auch die Ausnehmung 5 zylindrisch. Es sind hier zwei Führungsarme 39 und 41 ersichtlich, die in einem Abstand zueinander angeordnet sind und vom Grundkörper 15 des Sperrkörpers 13 ausgehen. Die Innenflächen der Führungsarme 39 und 41 sind eben ausgebildet und in einem solchen Abstand angeordnet, dass hier der Führungsbereich 31 des bei der Darstellung gemäß Figur 2 nicht wiedergegebenen Scharnierelements 7 zu liegen kommt. Figur 2 lässt erkennen, dass der Grundkörper 15 des Sperrkörpers 13 eine konzentrisch zur Ausnehmung 5 angeordnete Durchgangsöffnung 43 aufweist, durch die der Stift 33 des hier nicht dargestellten Scharnierelements 7 geführt wird. Der Sperrkörper 13 führt also das Scharnierelement 7 einerseits im Bereich der Durchgangsöffnung 43, andererseits durch die Innenflächen der Führungsarme 39 und 41; daher auch die Bezeichnung der Führungshülse.

Auch in Figur 2 ist das Werkzeug 21 angedeutet, mit dessen Dom 23 das Gehäuse 3, wie oben erläutert, verformt wird.

Figur 3 zeigt den in Figur 2 wiedergegebenen Schnitt, allerdings mit eingesetztem Scharnierelement 7. Gleiche Teile sind mit gleichen Bezugsziffern versehen, so dass auf die Beschreibung zu Figur 1 und 2 verwiesen wird Deutlich ist bei dieser Schnittdarstellung erkennbar, dass der Abstand der Führungsarme 39 und 41 so gewählt ist, dass hier der Führungsbereich 31 des Scharnierelements 7 flächig geführt wird, wobei durch die Verankerung des Sperrkörpers 13 eine Rotation des Führungsbereichs 31 und damit des Scharnierelements 7 innerhalb der Ausnehmung 5 verhindert wird; daher auch die Bezeichnung der Verschlusshülse.

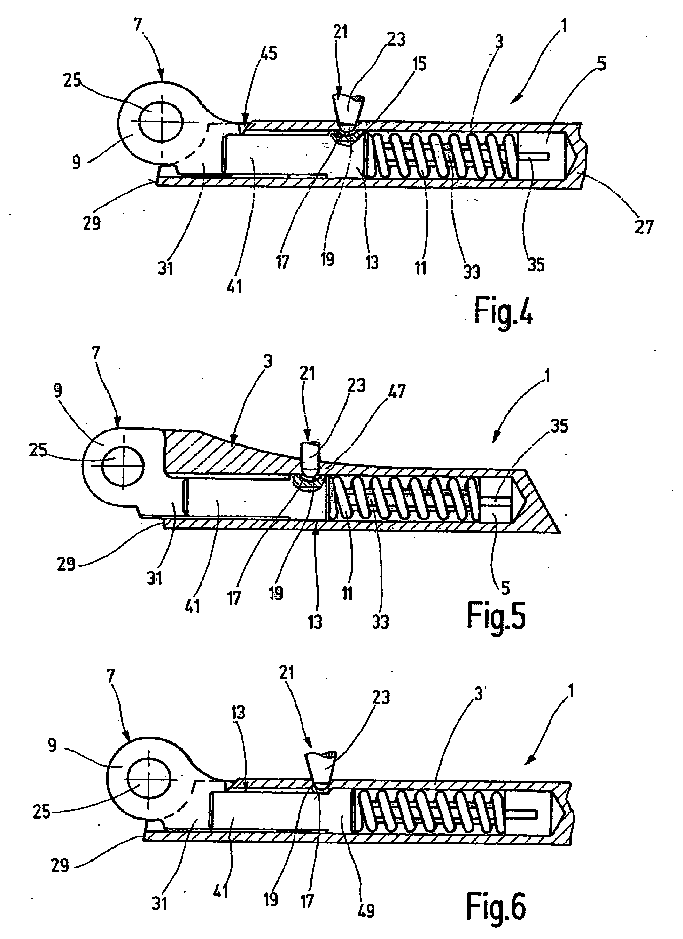

Figur 4 zeigt ein weiteres Ausführungsbeispiel eines Federscharniers 1. Gleiche Teile sind mit gleichen Bezugsziffern versehen, so dass auf die Beschreibung zu den vorangegangenen Figuren verwiesen und hier nur auf die Unterschiede gegenüber dem Ausführungsbeispiel gemäß Figur 1 eingegangen wird.

Das Gehäuse 3 weist einen Schlitz 45 auf, dessen Breite an die Dicke des Scharnierelements 7 so angepasst ist, dass die den Schlitz 45 begrenzenden Wände des Gehäuses 3 ebenfalls zur Führung des Scharnierelements 7 beitragen.

Figur 5 zeigt ein weiteres Ausführungsbeispiel eines Federschamiers 1. Gleiche Teile sind mit gleichen Bezugsziffern versehen, so dass insofern auf die Beschreibung zu den vorangegangenen Figuren verwiesen wird.

Bei den in Figur 1 und 4 dargestellten Ausführungsbeispielen wird das Gehäuse 3 des Federschamiers 1 durch den Bügel 27 einer Brille gebildet. Das in Figur 5 dargestellte Ausführungsbeispiel des Federschamiers 1 zeichnet sich dadurch aus, dass das Gehäuse 3 als getrenntes Element ausgebildet ist, das auf einen hier nicht dargestellten Bügel 27 aufgebracht wird. Dabei können übliche Verfahren wie Löten, Schweißen, insbesondere Elektroschweißen, und dergleichen eingesetzt werden.

Bei dem hier dargestellten Ausführungsbeispiel wird besonders deutlich, dass der Verformungsbereich 19 durch einen plastisch verformbaren Wandbereich des Gehäuses 3 gebildet wird, der dunner ist ais die übrige Wandung 47 des Gehäuses 3. Der Dorn 23 des Werkzeugs 21 ist hier daher bereichsweise zylindrisch ausgebildet, während der Dom 23 bei den Ausführungsbeispielen gemäß den Figuren 1 und 4 eine kegelförmige Außenkontur aufweisen kann.

Vorzugsweise ist auch bei den Federscharnieren 1 gemäß den Figuren 1 und 4 der Verformungsbereich 19 ebenfalls durch einen plastisch verformbaren Wandbereich realisiert, der dünner ist als die übrige Wandung des Gehäuses 3.

Den Ausführungsbeispielen, die in den Figuren 1, 4 und 5 dargestellt sind, ist gemeinsam, dass der Aufnahmebereich 17 im Sperrkörper 13 in einem ringförmigen Bereich des Grundkörpers 15 angeordnet ist. Von diesem können, wie erläutert, zwei Führungsarme 39 und 41 ausgehen, die der Führung des Scharnierelements 7, insbesondere dessen Führungsbereich 31 dienen. Bei dem hier dargestellten Ausführungsbeispiel wird das Scharnierelement ausschließlich durch den Sperrkörper 13 geführt. Dadurch, dass der Aufnahmebereich 17 durch eine definierte Senke realisiert wird, die beispielsweise kegelförmig ausgebildet ist, wird der Sperrkörper 13 durch den Verformungsbereich 19, der in den Aufnahmebereich 17 greift, sowohl gegen ein Verdrehen gegenüber dem Gehäuse 3 als auch gegenüber einer axialen Verlagerung gesichert. Damit wird auch ein Herausziehen des Scharnierelements 7 aus der Ausnehmung 5 des Gehäuses 3 verhindert.

Figur 6 zeigt ein abgewandeltes Ausführungsbeispiel eines Federscharniers 1, das im Wesentlichen dem in Figur 4 dargestellten entspricht. Gleiche Teile sind mit gleichen Bezugsziffern versehen, so dass auf die Beschreibung zu den vorangegangenen Figuren verwiesen wird.

Entscheidender Unterschied zu dem Ausführungsbeispiel gemäß Figur 4 aber auch gegenüber dem in Figur 1 dargestellten Ausführungsbeispiel ist, dass der Verformungsbereich 19 des Gehäuses 3 nicht in den ringförmigen Bereich 49 des Grundkörpers 15 des Sperrkörpers 13 eingreift, sondern in den zwischen den Führungsarmen 39 und 41 gegebenen Ausschnitt beziehungsweise Freiraum, der - in Längsrichtung gesehen - von den beiden Innenflächen der Führungsarme 39, 41 begrenzt wird und in Figur 6 nach rechts durch den ringförmigen Bereich 49. Da der Verformungsbereich 19 in die Ausnehmung 5 hineinragt und der Sperrkörper 13 im Innem der Ausnehmung 5 rechts von dem Verformungsbereich angeordnet ist, kann der Sperrkörper 13 bei einer auf das Scharnierelement 7 wirkenden Zugkraft nicht mehr aus der Ausnehmung 5 herausgezogen werden. Eine Verdrehung des Sperrkörpers 13 wird durch die beiden Führungsarme 39 und 41 verhindert.

Letztlich wird also auch bei dem Ausführungsbeispiel gemäß Figur 6 der Sperrkörper 13 gegen Verdrehen und gegen ein Herausziehen aus der Ausnehmung 5 gesichert.

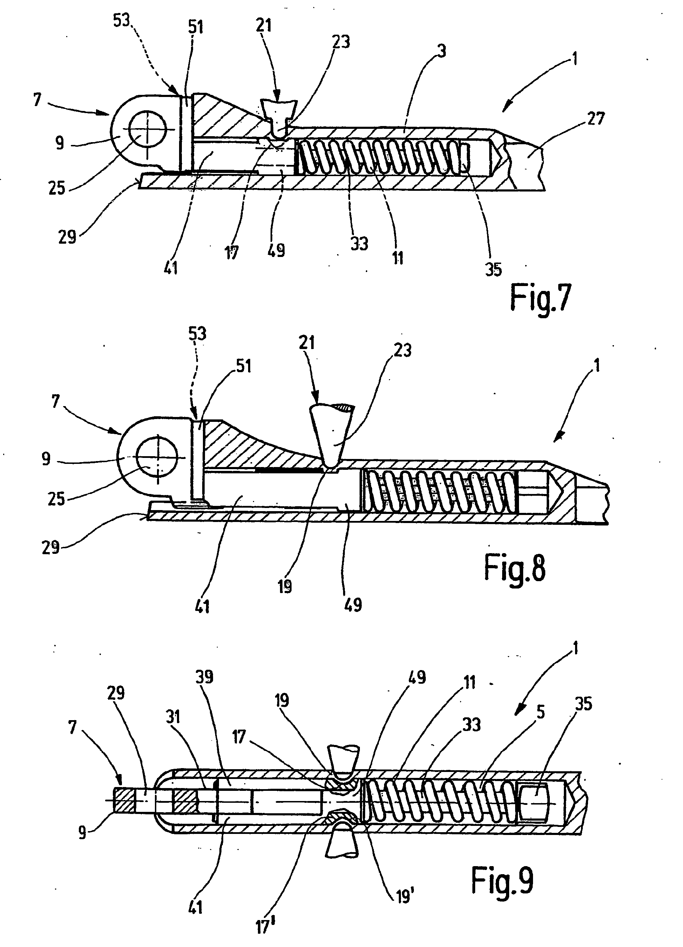

Figur 7 zeigt ein weiteres Ausführungsbeispiel eines Federscharniers 1. Gleiche Teile sind mit gleich Bezugsziffern versehen, so dass auf die Beschreibung zu den vorangegangenen Figuren verwiesen wird.

Der Unterschied gegenüber den bereits beschriebenen Federscharnieren besteht darin, dass der Sperrkörper 13 mindestens eine, hier zwei rechts und links von dem Scharnierelement 7 angeordnete Laufflächen 51 aufweist, von denen hier lediglich die vordere dargestellt ist. Die andere Lauffläche 53 liegt hinter dem Scharnierelement 7 und ist damit verdeckt.

Bei dem in Figur 7 dargestellten Ausführungsbeispiel greift der Verformungsbereich 19 des Gehäuses 3 in einen Aufnahmebereich 17 des Sperrkörpers 13 ein, der wiederum im ringförmigen Bereich 49 des Grundkörpers 15 angeordnet ist. Diese Ausgestaltung ist also vergleichbar mit denen, die anhand der Figuren 1 bis 5 erläutert wurden. Bei dem hier dargestellten Ausführungsbeispiel ist das Widerlager 35 für das Federelement 11 nicht durch eine Abflachung des Endes des Stifts 33 realisiert, sondern durch eine Stauchung.

Im Unterschied dazu ist bei dem in Figur 8 dargestellten Ausführungsbeispiel des Federschamiers 1 der Verformungsbereich 19 wiederum in unmittelbarer Nähe zum ringförmigen Bereich 49 angeordnet und zwar zwischen den Führungsarmen 31 und 41, von denen hier der vordere Führungsarm 41 sichtbar ist. An den Führungsarmen sind wiederum Laufflächen 51 und 53 vorgesehen, die rechts und links vom Scharnierelement 7 angeordnet sind.

Zu den Laufflächen, die grundsätzlich bekannt sind, ist Folgendes festzuhalten: Bei einer Schwenkbewegung des Bügels 27, der hier das Gehäuse 3 der in den Figuren 7 und 8 dargestellten Federscharniere 1 bildet, laufen am Scharnierteil, das mit dem Mittelteil der Brille verbunden ist, ausgebildete Nocken an der Gehäusevorderseite entlang, was zu einem Verschleiß des Gehäuses 3 und der Nocken führt. Dies gilt insbesondere dann, wenn für das Schamierteil und für das Gehäuse 3 Materialien gewählt werden, die zum Kultverschweißen neigen, wie dies beispielsweise bei Titan der Fall ist. Derartige Verschleißerscheinungen können vermieden werden, wenn ein Material zwischen die beiden Elemente, also zwischen die Nocken am Scharnierteil und die Vorderseite des Gehäuses 3, eingebracht wird, nämlich die Laufflächen 51 und 53, das gegenüber den Nocken am Scharnierteil, hier also gegenüber Titan gute Gleiteigenschaften aufweist. Auf diesen laufen dann die Nocken des Scharnierteils ab.

Ein Vergleich der Figuren 7 und 8 zeigt, dass die Führungsarme 39 und 41 verschieden lang ausgebildet sein können, damit also verschiedene Längen des Federscharniers 1 realisierbar sind.

Bei den anhand den Figuren 1 bis 8 dargestellten Ausführungsbeispielen wurde der Verformungsbereich 19 oben am Gehäuse 3 vorgesehen. Dabei ist davon auszugehen, dass die Federschamiere 1 hier jeweils einen einzigen Verformungsbereich 19 aufweisen, der mit einem entsprechenden Aufnahmebereich 17 im Sperrkörper 13 zusammenwirkt.

Figur 9 zeigt ein weiteres Ausführungsbeispiel eines Federschamiers im Längsschnitt, wobei die Schnittebene gegenüber der in den Figuren 1, 4, 5, 6, 7 und 8 gewählten um 90° gedreht ist. Gleiche Teile sind mit gleichen Bezugsziffern versehen, so dass insofern auf die Beschreibung zu den vorangegangen Figuren verwiesen wird.

Einziger Unterschied ist hier, dass das Gehäuse 3 zwei Verformungsbereiche 19 und 19' aufweist, die rechts und links am Gehäuse 3 vorgesehen sind und mit entsprechenden Aufnahmebereichen 17 und 17' im Grundkörper 15 des Sperrkörpers 13 zusammenwirken. Die Aufnahmebereiche 17, 17' sind im ringförmigen Bereich 49 des Sperrkörpers 13 angeordnet, der hier wiederum zwei Führungsarme 39 und 41 aufweisen kann, die mit dem Führungsbereich 31 des Scharnierelements 7 zusammenwirken.

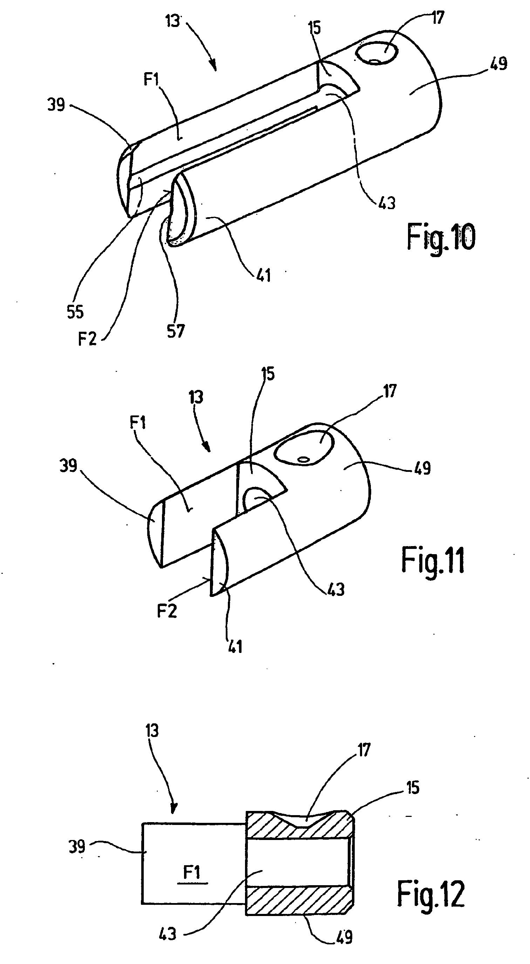

Figur 10 zeigt einen Sperrkörper 13 in perspektivischer Ansicht. Deutlich sind hier einerseits der ringförmige Bereich 49 des Grundkörpers 15 sowie die Führungsarme 39 und 41 mit den als Führungsflächen wirkenden Innenflächen F1 und F2 zu erkennen. Im ringförmigen Bereich 49 ist der Aufnahmebereich 17 vorgesehen, der hier als Senke ausgebildet ist und eine im Wesentlichen kegelförmige Kontur zeigt.

Die den ringförmigen Bereich 49 durchgreifende Durchgangsbohrung 43 weist einen Durchmesser auf, der etwas größer ist als der Abstand zwischen dem ersten Führungsarm 39 und dem zweiten Führungsarm 41. Dadurch ergibt sich auf der Innenfläche der Führungsarme eine Rinne 55 beziehungsweise 57.

Figur 11 zeigt ein Ausführungsbeispiel eines Sperrkörpers 13, dessen Führungsarme 39 und 41 kürzer ausgebildet sind, als dies bei dem Ausführungsbeispiel gemäß Figur 10 der Fall ist. Der Durchmesser der Durchgangsöffnung 43 ist kleiner als der Abstand der Führungsarme 39, 41, so dass deren Innenseiten plane Führungsflächen bilden, die mit dem Führungsbereich 31 eines hier nicht dargestellten Scharnierelements 7 zusammenwirken.

Auch hier ist der Aufnahmebereich 17 deutlich erkennbar, der im ringförmigen Bereich 49 des Grundkörpers 15 des Scharnierelements 13 angeordnet ist und eine kegelstumpfförmige Kontur aufweist.

Figur 12 zeigt einen Längsschnitt durch das in Figur 11 dargestellte Ausführungsbeispiel des Sperrkörpers 13. Deutlich ist hier die Innenfläche des Führungsarms 39 ersichtlich, außerdem die kegelstumpfförmige Kontur des Aufnahmebereichs 17, der im ringförmigen Bereich 49 des Grundkörpers 15 des Sperrkörpers 13 angeordnet ist. Die Innenfläche der Durchgangsöffnung 43 dient ebenso wie die einander zugewandten Innenflächen der Führungsarme 39 und 41 der Führung des Scharnierelements 7, wobei im Bereich der Durchgangsöffnung 43 der Stift 33 des Scharnierelements 7 angeordnet ist und geführt wird.

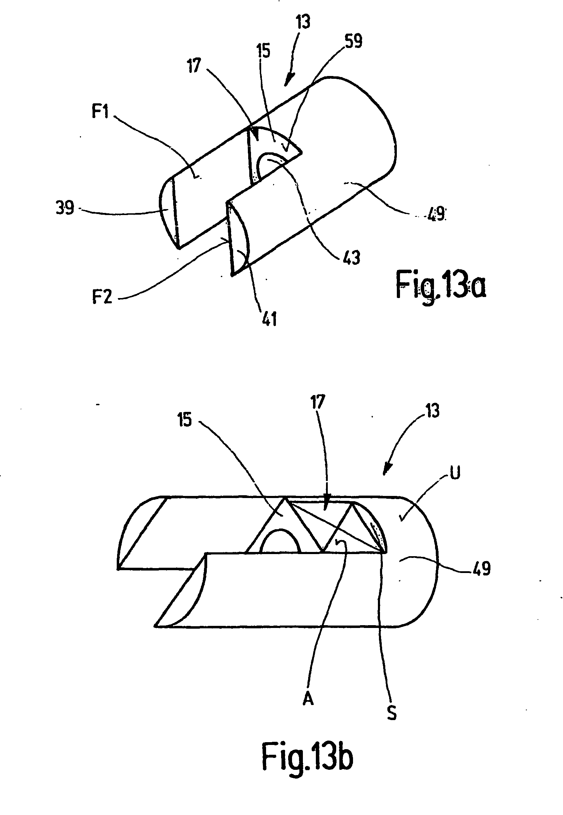

Figur 13a zeigt ein abgewandeltes Ausführungsbeispiel eines Sperrkörpers 13. Gleiche Teile sind mit gleichen Bezugsziffern versehen, so dass auf die Beschreibung zu den Figuren oben verwiesen wird. Das in Figur 13a dargestellte Ausführungsbeispiel zeichnet sich dadurch aus, dass in dem ringförmigen Bereich 49 kein Aufnahmebereich 17 vorgesehen ist. Dieser wird vielmehr durch den Freiraum zwischen den Führungsarmen 39 und 41 gebildet, die rechts und links an einem hier nicht dargestellten Verformungsbereich 19 anliegen und damit eine Verdrehung des Sperrkörpers 13 in einer Ausnehmung 5 eines Gehäuses 3 verhindern. Ein Herausziehen des Sperrkörpers 13 aus einer Ausnehmung 5 eines Federschamiers 1 wird durch die dem Betrachter zugewandte Vorderseite 59 des ringförmigen Bereichs 49 des Grundkörpers 13 verhindert.

Der in Figur 13a dargestellte Sperrkörper 13 weist also einen zwischen den Führungsarmen 39 und 41 liegenden Aufnahmebereich 17 auf, der durch den Ausschnitt zwischen den Führungsarmen 39 und 41 gebildet wird. Dieser umgreift einen Verformungsbereich 19 eines Federschamiers 1 an drei Seiten, nämlich mit den Führungsarmen 39 und 41 und mit der Vorderseite 59 des ringförmigen Bereichs 49 des Sperrkörpers 13.

Figur 13b zeigt ein abgewandeltes Ausführungsbeispiel eines Sperrkörpers 13. Gleiche Teile sind mit gleichen Bezugsziffern versehen, so dass insofern auf die Beschreibung zu den vorangegangenen Figuren, insbesondere auf Figur 13a verwiesen wird.

Der Grundkörper 15 des Sperrkörpers 13 weist zwei Führungsarme 39 und 41 mit einem dazwischen liegenden Aufnahmebereich 17 auf, der hier als Abflachung A eines Teils des ringförmigen Bereichs 49 realisiert ist. Diese liegt zwischen den beiden Führungsarmen 39 und 41 und geht über eine Stufe S in die Umfangsfläche U des ringförmigen Bereichs 49 über.

Ein Verformungsbereich 19 kommt auf der Abflachung A zu liegen, so dass der Sperrkörper 13 innerhalb der Ausnehmung 5 eines Gehäuses 3 nicht mehr verdreht werden kann. Der Verformungsbereich 19 schlägt auch gegen die Stufe S an, so dass der Sperrkörper 13 nicht mehr aus der Ausnehmung 5 herausgezogen werden kann.

Es zeigt sich also, dass der Sperrkörper 13 einen Aufnahmebereich 17 aufweist, der im Zusammenspiel mit einem Verformungsbereich 19 dazu führt, dass der Sperrkörper 13 sowohl gegen Rotation ais auch gegen eine axiale Verlagerung innerhalb des Gehäuses 3 eines Federschamiers 1 gesichert ist.

Der Aufnahmebereich 17 ist bei dem in Figur 13b dargestellten Ausführungsbeispiel relativ einfach herstellbar, nämlich dadurch, dass Material von der Umfangsfläche U des Grundkörpers 15 des Sperrkörpers 13 abgetragen wird, beispielsweise durch einen Fräs- oder Schleifvorgang. Natürlich kann die Abflachung A auch bei einem Formungsprozess während der Herstellung des Sperrkörpers 13 berücksichtigt und in den Grundkörper 15 eingeformt werden.

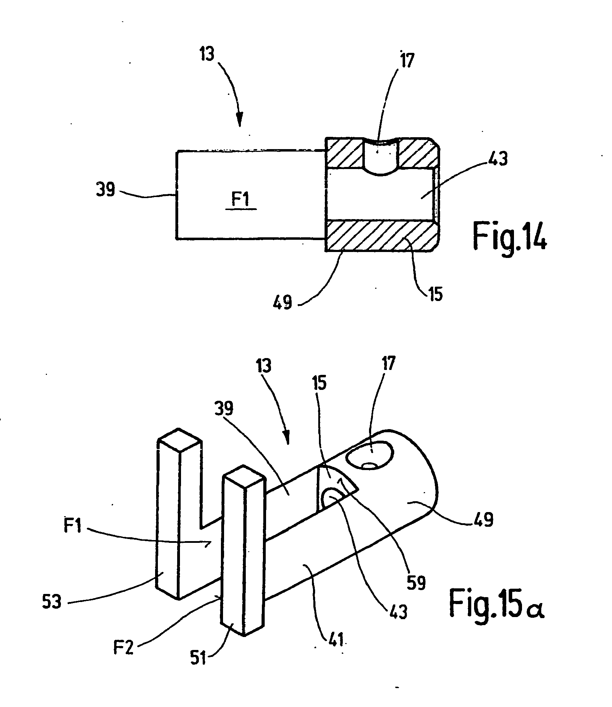

Figur 14 zeigt ein abgewandeltes Ausführungsbeispiel eines Sperrkörpers 13 im Längsschnitt. Deutlich erkennbar sind hier ein Führungsarm 39, der ringförmige Bereich 49 des Grundkörpers 15 des Sperrkörpers 13 und die diesen Bereich durchdringende Durchgangsöffnung 43. Der Aufnahmebereich 17 wird hier durch eine Bohrung realisiert, die die Wandung des ringförmigen Bereichs 49 durchdringt und damit sicherstellt, dass ein Verformungsbereich 19 hier eingreifen kann. Diese Ausgestaltung des Aufnahmebereichs 17 führt auch dazu, dass, wenn hier ein Verformungsbereich 19 eingreift, der Sperrkörper 13 sowohl gegen ein Verdrehen innerhalb einer Ausnehmung 5 eines Gehäuses 3 eines Federscharniers 1 gesichert ist, als auch gegen ein Herausziehen des Sperrkörpers 13 und damit eines Scharnierelements 7 aus der Ausnehmung 5 des Federschamiers 1.

Figur 15a zeigt in perspektivischer Darstellung ein abgewandeltes Ausführungsbeispiel eines Sperrkörpers 13, das ähnlich dem in Figur 11 dargestellten ausgebildet ist. Gleiche Teile sind mit gleichen Bezugsziffern versehen, so dass auf die vorangegangenen Figuren und deren Beschreibung verwiesen wird.

Das in Figur 15a dargestellte Ausführungsbeispiel zeichnet sich durch Laufflächen 51 und 53 aus, die durch Materialstreifen gebildet werden, die an den dem ringförmigen Bereich 49 abgewandten Enden der Führungsarme 39 und 41 angeordnet sind. Vorzugsweise ist der Sperrkörper 13 einstückig ausgebildet. Denkbar ist es aber auch, die Laufflächen 51 und 53 an den Enden der Führungsarme 39 und 41 auf geeignete Weise zu befestigen, beispielsweise fest zu schweißen oder zu löten. Bei dem in Figur 15a dargestellten Ausführungsbeispiel ist ein Aufnahmebereich 17 im ringförmigen Bereich 49 realisiert. Denkbar ist es aber auch, die zwischen den Führungsarmen 39 und 41 liegende Ausnehmung als Aufnahmebereich 17 zu wählen, wie dies anhand von Figur 13 erläutert wurde.

Schließlich ist es auch möglich, bei dem in Figur 15a dargestellten Ausführungsbeispiel zwei an den Seiten angeordnete Aufnahmebereiche vorzusehen, wie dies anhand von Figur 9 erläutert wurde. Dasselbe gilt natürlich auch für die anderen in den Figuren 10 bis 14 dargestellten Sperrkörper 13.

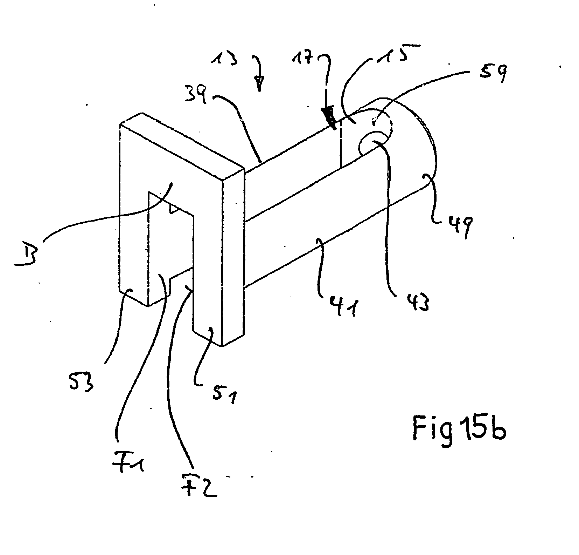

Figur 15b zeigt in perspektivischer Ansicht ein weiteres Ausführungsbeispiel eines Sperrkörpers, der gegenüber dem in Figur 15a abgewandelt ist. Gleiche Teile sind mit gleichen Bezugsziffern versehen, so dass insofern auf vorangegangene Figur verwiesen wird.

Der in Figur 15b dargestellte Sperrkörper 13 weist zwei Führungsarme 39 und 41 auf, die von einem ringförmigen Bereich 49 ausgehen und an ihren, dem ringförmigen Bereich 49 abgewandten Enden mit Laufflächen 51 und 53 versehen sind. Diese sind in ihrem oberen Bereich durch eine Materialbrücke B miteinander verbunden, so dass letztlich eine U-förmige Frontseite gebildet wird, die ein Gehäuse 3 abschließt, in das der Sperrkörper 13 eingebracht wird. Im Übrigen trägt die Materialbrücke B zur Stabilisierung des Sperrkörpers 13 bei, weil die dem ringförmigen Bereich 49 des Grundkörpers 15 abgewandten Enden der Führungsarme 39 und 41 miteinander verbunden sind.

Auf der Innenseite der Führungsarme 39 und 41 sind als Führungsflächen wirkende Innenflächen F1 und F2 zu erkennen, die oben bereits im Einzelnen erläutert wurden und das Scharnierelement 7 führen, das zwischen die Führungsarme 39 und 41 eingeführt wird.

Bei dem hier dargestellten Ausführungsbeispiel des Sperrkörpers 13 weist der ringförmige Bereich 49 keinen Aufnahmebereich auf. Vielmehr ist auch hier vorgesehen, dass der hier nicht dargestellte Verformungsbereich 19 des Gehäuses 3 zwischen den Führungsarmen 39 und 41 zu liegen kommt. Damit ist eine Verdrehung des Sperrkörpers 13 innerhalb des hier nicht dargestellten Gehäuses 3 ausgeschlossen. Außerdem wird der Verformungsbereich 19 so zwischen den Führungsarmen 39 und 41 angeordnet, dass er an der Vorderseite 59 des ringförmigen Bereichs 49 anliegt. Damit ist auch eine axiale Verlagerung des Sperrkörpers 13 verhindert.

Figur 15b zeigt noch die Durchgangsöffnung 43, die den ringförmigen Bereich 49 des Grundkörpers 15 durchdringt und deren Wandung der Führung des Stifts 33 des Scharnierelements 7 dient, wenn dieses in den Sperrkörper 13 eingesetzt wird.

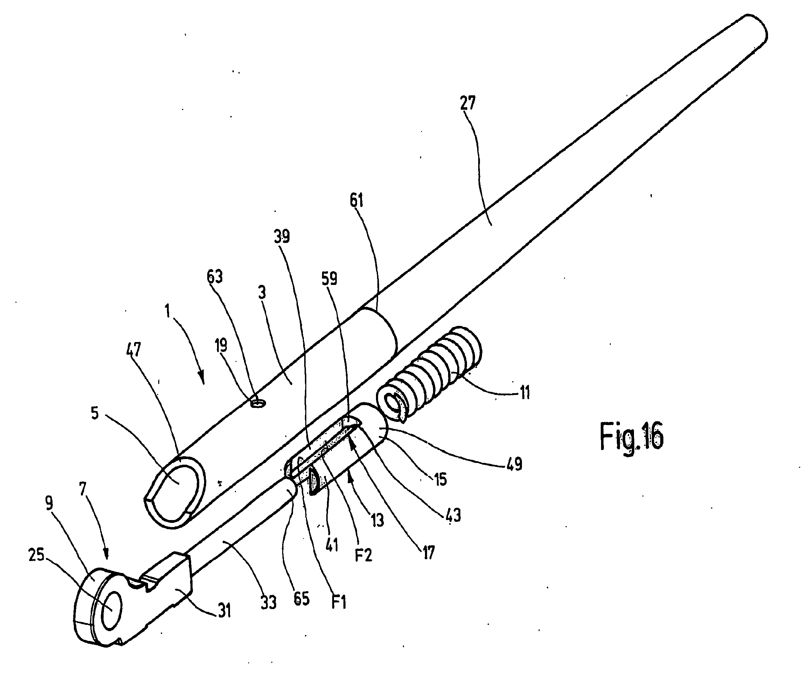

Figur 16 zeigt in Explosionsdarstellung ein Federgehäuse 1 mit einem Scharnierelement 7, einem Sperrkörper 13 und mit einem Federelement 11, das hier wiederum als Schraubenfeder ausgebildet ist.

Das Federscharnier 1 geht hier in einen Bügel 27 einer Brille über. Durch eine Linie 61 ist angedeutet, dass das Federscharnier 1 an dem Bügel 27 angesetzt sein kann. Es ist aber auch möglich, die Ausnehmung 5 des Federschamiers 1 unmittelbar in das Ende eines Bügels 27 einzubringen, so dass zwischen dem Federscharnier 1 beziehungsweise dessen Gehäuse 3 und dem übrigen Bügel 27 kein Übergang zu sehen ist und damit die Linie 61 entfällt.

Auf der Oberseite des Gehäuses ist eine Vertiefung 63 zu sehen, in deren Bereich die Dicke der Wandung 47 reduziert ist und ein Verformungsbereich 19 ausgebildet wird. Bei entsprechend dünner Wandung 47 kann auf die Vertiefung 63 verzichtet werden. Sie ist jedoch deshalb hilfreich, weil bei der Fertigstellung des Gehäuses ohne weiteres ersichtlich ist, wo der Verformungsbereich 19 angeordnet ist und wo mit dem Werkzeug 21 angesetzt werden muss, um den Sperrkörper 13 sicher in der Ausnehmung 5 des Gehäuses 3 des Federschamiers 1 zu verankern.

Das Scharnierelement 7 weist ein Scharnierauge 9 auf, das von einer Durchgangsöffnung 25 durchgriffen wird, außerdem einen Führungsbereich 31, der in den zwischen den Führungsarmen 39 und 41 gegebenen Freiraum des Sperrkörpers 13 zu liegen kommt. Der Grundkörper 15 des Sperrkörpers 13 wird durch den Stift 33 des Scharnierelements 7 durchgriffen. Dieser ragt also durch die Durchgangsöffnung 43 im ringförmigen Bereich 49 des Sperrkörpers 13 und erstreckt sich durch das Federelement 11. Das dem Scharnierauge 9 abgewandte Ende 65 des Stifts 33 wird nach dem Aufschieben des Sperrkörpers 13 und des Federelements 11 verformt, so dass ein beispielsweise durch eine Abflachung realisiertes Widerlager 35 entsteht, das anhand der vorangegangenen Figuren erläutert wurde und dazu dient, das Federelement 11 zwischen dem Sperrkörper 13 und dem Widerlager 35 einzuspannen.

Die aus Scharnierelement 7, Sperrkörper 13 und Federelement 11 bestehende Montageeinheit kann nach der Vormontage in die Ausnehmung 5 eingeschoben werden. Dann wird der Verformungsbereich 19 so verformt, dass dieser in die Ausnehmung 5 im Gehäuse 3 eingreift und hier beispielsweise in den Aufnahmebereich 17 verlagert wird, der zwischen den Führungsarmen 39 und 41 liegt und der nach rechts durch den ringförmigen Bereich 49 beziehungsweise dessen Stirnseite 59 begrenzt wird.

Durch die Verlagerung des Verformungsbereichs 19 in den Aufnahmebereich 17 wird der Sperrkörper 13 im Inneren des Federscharniers 1 verankert und gegen Verdrehen und gegen ein Herausziehen aus der Ausnehmung 5 gesichert. Damit wird auch verhindert, dass das Scharnierelement 7 aus der Ausnehmung herausgezogen werden kann.

Anhand von Figur 16 wurde erläutert, dass in die Wandung 47 eine Vertiefung 63 eingebracht werden kann. Denkbar ist es aber auch, in die Wandung 47 ein Durchgangsloch einzubringen, dessen Rand in den Aufnahmebereich 17 hineinverlagert wird und damit den Verformungsbereich 19 bildet. Man kann versuchen, den Rand des Lochs, damit also den Verformungsbereich 19 dicht an den Aufnahmebereich 17 anzuformen. Es ist jedoch nicht ganz auszuschließen, dass bei einer derartigen Ausgestaltung des Verformungsbereichs 19 Verunreinigungen in das Innere des Gehäuses 3 gelangen. Daher ist es vorzuziehen, wenn der Verformungsbereich 19, wie oben beschrieben, durch einen geschlossenen Wandbereich realisiert wird, der plastisch verformbar ist und dessen Wandstärke vorzugsweise dünner ist als die Wandung 47 des Gehäuses 3. Durch die reduzierte Wandstärke kann sichergestellt werden, dass die Kräfte zur Verlagerung des Verformungsbereichs 19 in den Aufnahmebereich 17 nicht zu groß werden. Somit lässt sich eine Verformung des Federscharniers 1 als Ganzes vermeiden.

Bei dem in Figur 16 dargestellten Ausführungsbeispiel des Federscharniers 1 kann auch ein Sperrkörper 13 Verwendung finden, wie er anhand von Figur 10 oder 11 erläutert wurde, oder wie er in Figur 15 dargestellt ist. Es ist also möglich, den Sperrkörper 13 mit mindestens einer Ausnehmung zu versehen, die den Aufnahmebereich 17 bildet wobei die Ausnehmung durch eine Senke oder durch eine Bohrung realisierbar ist. Dabei können auch, wie anhand von Figur 9 erläutert, zwei an der Seite des Federschamiers 1 angeordnete Verformungsbereiche und Aufnahmebereiche vorgesehen werden. Schließlich ist es möglich, den Sperrkörper 13 mit Laufflächen 51 und 53 zu versehen, was anhand der Figuren 7 und 8 sowie 15 näher erläutert wurde.

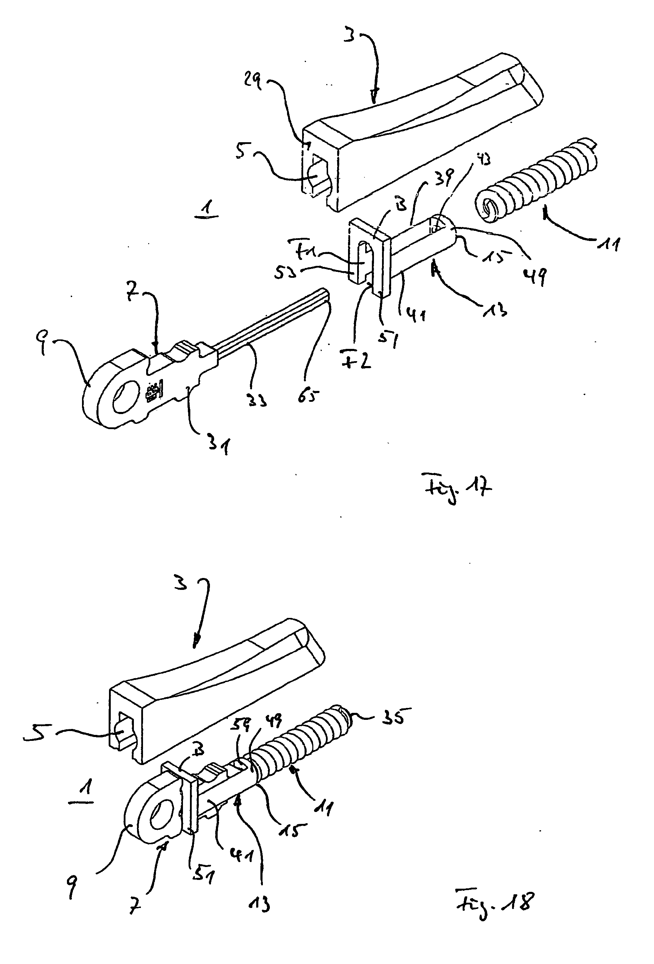

Figur 17 zeigt ein Federscharnier in Explosionsdarstellung mit einem Gehäuse 3, das getrennt von einem Bügel einer Brille ausgebildet und auf diesen aufbringbar ist. Teile, die bereits anhand der vorangegangenen Figuren erläutert wurden, sind mit gleichen Bezugsziffern versehen, so dass insofern zur Vermeidung von Wiederholung auf die vorangegangenen Figuren verwiesen wird.

In der perspektivischen Ansicht gemäß Figur 17 sind das Scharnierelement 7, der Sperrkörper 13, wie er anhand von Figur 15b erläutert wurde, und ein Federelement 11 fluchtend zueinander angeordnet. Parallel dazu liegt weiter hinten das Gehäuse 3.

Deutlich erkennbar ist der Führungsbereich 31 des Scharnierelements 7, der mit den Führungsflächen F1 und F2 des Sperrkörpers 13 zusammenwirkt. Der Stift 33 des Scharnierelements 7 greift durch die Durchgangsöffnung 43 im Grundkörper 15 des Sperrkörpers 13. und durchdringt das als Schraubenfeder ausgebildete Federelement 11. Um dieses auf dem Stift 33 zu sichern, wird das Ende 65 des Stifts 33 verformt, beispielsweise platt gedrückt, um ein Widerlager 35 für das Federelement 11 zu realisieren.

Das Scharnierelement 7 wird dann - wie bei den anderen Ausführungsbeispielen - gemeinsam mit dem Sperrkörper 13 und dem Federelement 11 zumindest bereichsweise in die Ausnehmung 5 des Gehäuses 3 eingeschoben; das Schamierauge 9 des Scharnierelements 7 bleibt außerhalb des Gehäuses 3.

Beim Einbringen der vormontierbaren Baugruppe aus Scharniereiement 7, Sperrkörper 13 und Federelement 11 wird so weit in das Gehäuse 3 eingeschoben, bis die Laufflächen 51 und 53 sowie die Materialbrücke B auf der Vorderseite 29 des Gehäuses 3 aufliegen.

Figur 18 zeigt ein Federscharnier 1 in Explosionsdarstellung, allerdings ist hier die vormontierbare Baugruppe aus Scharnierelement 7, Sperrkörper 13 und Federelement 11 bereits zusammengesetzt. Das Ende 65 des hier nicht sichtbaren Stifts 33 ist in Längsrichtung gestaucht, um das Widerlager 35 auszubilden und das Federelement zu sichern.

Getrennt von der vormontierbaren Baugruppe ist das Gehäuse 3 des Federschamiers 1 dargestellt.

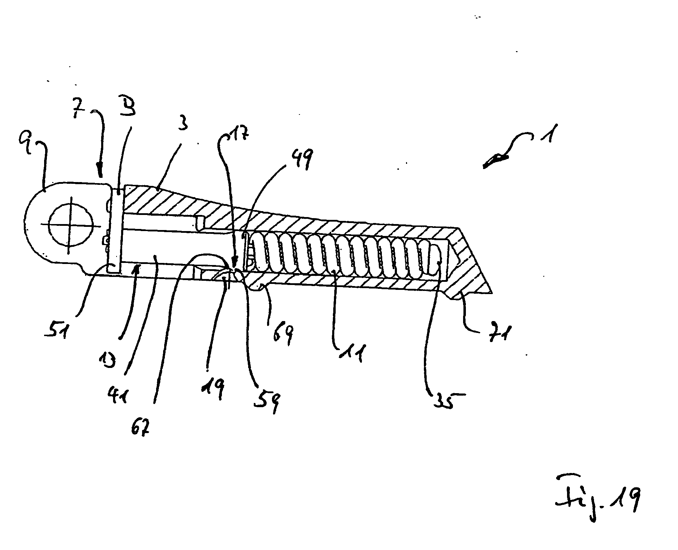

Figur 19 zeigt das in den Figuren 17 und 18 dargestellte Federscharnier in zusammengebautem Zustand, wobei das Gehäuse 3 im Längsschnitt dargestellt ist

Deutlich erkennbar ist, dass das Scharnierelement 7 teilweise in die Ausnehmung 5 im Gehäuse 3 eingeschoben ist, nämlich so weit, dass das Schamierauge 9 vorsteht Der Sperrkörper 13 wird so im Inneren des Gehäuses 3 verriegelnd gehalten, dass er einerseits in axialer Richtung fixiert ist und andererseits nicht innerhalb des Gehäuses 3 verdreht werden kann. Dazu ist ein Verformungsbereich 19 des Gehäuses 3, der hier beispielhaft auf dessen Unterseite angeordnet ist, in das Innere der Ausnehmung 5 so eingedrückt, dass er an der Vorderseite 59 des Sperrkörpers 3 anliegt. Der Verformungsbereich 19 reicht bis an die Führungsarme 39 und 41 heran, von denen hier der vordere Führungsarm 41 sichtbar ist. Eine Verdrehung des Sperrkörpers 13 wird dadurch verhindert, dass die unteren Kanten der Führungsarme 39 und 41 gegen den Verformungsbereich 19 anstoßen.

Bei dem hier dargestellten Ausführungsbeispiel ist das Gehäuse 3 auf seiner Unterseite mit Schweißwarzen 69 und 71 versehen, die dazu dienen, das Gehäuse 3 auf einen hier nicht dargestellten Bügel einer Brille im Wege des Elektroschweißens zu befestigen. Selbstverständlich sind auch andere Befestigungsmöglichkeiten wie Löten oder dergleichen möglich.

Das Scharnierelement 7 ist dort, wo der Verformungsbereich 19 vorgesehen ist, mit einem abgeflachten Bereich 67 versehen, um sicherzustellen, dass der Verformungsbereich 19 nicht auf das Scharnierelement 7 drückt und dessen Bewegungsfreiheit einschränkt. Der ringförmige Bereich 49 reicht, in radialer Richtung gemessen, über den abgeflachten Bereich 67 hinaus. Wird also das Gehäuse 3 im Aufnahmebereich 17 des Sperrkörpers 3 im Verformungsbereich 19 eingedrückt, so wird der Bereich 67 des Scharnierelements 7 durch den Verformungsbereich 19 des Gehäuses 3 nicht blockiert, wobei aber eine Verdrehung des Scharnierelements 7 in der Ausnehmung 5 verhindert wird. Gleichzeitig dient, wie gesagt, die Vorderseite 59 des ringförmigen Bereichs 49 des Sperrkörpers 13 als axialer Anschlag für den Verformungsbereich 19. Damit ist auch hier sichergestellt, dass das Scharnierelement 7 gegen Verdrehung und eine zu große axiale Verlagerung gesichert im Gehäuse 3 gehalten wird.

Insgesamt zeigt sich, dass auf unterschiedliche Weise ein Federscharnier 1 realisierbar ist, das einen Sperrkörper 13 mit einem Aufnahmebereich 17 umfasst und ein Gehäuse 3 mit einem Verformungsbereich 19. Der Sperrkörper 13 kann auf unterschiedliche Weise realisiert werden, ebenso der zugehörige Aufnahmebereich 17, der eine oder mehrere Vertiefungen oder Bohrungen umfassen kann oder aber eine Ausnehmung, die zwischen zwei Führungsarmen 39 und 41 liegt. Der Verformungsbereich weist mindestens einen Wandbereich auf, der plastisch verformbar ist und in den Aufnahmebereich 17 verlagert werden kann. Auf diese Weise ist es einfach möglich, insbesondere ohne Verwendung irgendwelcher Schrauben, das Scharnierelement 7 mittels des Sperrkörpers 13 im Inneren des Gehäuses 3 zu verankern, wobei der Sperrkörper 13 sowohl gegen Verdrehen als auch gegen Herausziehen aus der Ausnehmung 5 des Gehäuses 3 gesichert ist.

Aus den Figuren wird deutlich, dass der Sperrkörper 13 mindestens eine Führungsfläche F1 aufweist, die mit einem Führungsbereich 31 des Scharnierelements 7 so zusammenwirkt, dass bei einer Verdrehsicherung und axialen Fixierung des Sperrkörpers 13 eine Verdrehung und eine zu weit gehende axiale Verlagerung des Scharnierelements 7 ebenfalls verhindert werden. Bei den hier dargestellten Ausführungsbeispielen ist ersichtlich, dass die Führungsarme 39 und 41 auf ihren Innenseiten jeweils eine Führungsfläche F1 und F2 aufweisen, zwischen denen der Führungsbereich 31 des Scharnierelements 7 angeordnet ist. Die Führungsflächen lassen eine axiale Verlagerung des Scharnierelements 7 über eine gewisse Wegstrecke zu. Durch die axiale Festlegung des Sperrkörpers 13 im Inneren des Gehäuses 3 und dadurch, dass sich das Federelement 11 an dem Sperrkörper 13 und am Widerlager 35 des Scharnierelements 7 abstützt, wird aber verhindert, dass das Scharnierelement 7 aus dem Gehäuse 3 herausgezogen werden kann.

Damit ist also sichergestellt, dass das Scharnierelement 7 gegenüber dem Gehäuse 3 nicht verdreht und nicht ganz aus der Ausnehmung 5 herausgezogen werden kann. Dieser einfache Aufbau bewährt sich insbesondere bei der zunehmenden Miniaturisierung der Federschamiere 1, wobei die Lage des Verformungsbereichs 19 besonders dann leicht erkennbar ist, wenn die Wandung 47 des Gehäuses 3 mit einem Bereich dünnerer Wandstärke versehen ist, wenn also beispielsweise eine Vertiefung 63 vorgesehen wird, die dem Verwender zeigt, wo die Verformung des Gehäuses 3 erfolgen muss, um den Sperrkörper 13 beziehungsweise das Scharnierelement 7 sicher im Gehäuse 3 zu verankern.

Vorzugsweise wird der Wandbereich des Gehäuses 3 im Verformungsbereich 19 durchgehend ausgebildet, so dass das Innere des Gehäuses 3 gegen das Eindringen von Verunreinigungen geschützt ist. Grundsätzlich ist es aber möglich, den Verformungsbereich 19 durch den Rand eines in die Wandung 47 des Gehäuses 3 eingebrachten Lochs zu realisieren.

Den hier dargestellten und erläuterten Ausführungsbeispielen ist zu entnehmen, dass der Verformungsbereich 19 auf der Oberseite des Gehäuses 3, aber auch auf dessen Unterseite vorgesehen werden kann. Außerdem ist es denkbar, im Bereich mindestens einer der Seitenwände des Gehäuses 3 einen Verformungsbereich 19 vorzusehen. Es wird auch klar, dass für ein Federscharnier ein einziger Verformungsbereich ausreichen kann, dass aber auch mehrere, gegebenenfalls paarweise gegenüberliegende, Verformungsbereiche realisiert werden können.

Nach allem ist ersichtlich, dass das hier verfolgte Grundprinzip der Sicherung des Scharnierelements 7 gegen Verdrehung und gegen Herausziehen aus dem Gehäuse 3 sowohl bei Federscharnieren 1 realisierbar ist, deren Gehäuse 3 Teil des Bügels ist, als auch bei Federscharnieren 1, die ein separates Gehäuse 3 aufweisen, das auf einen Bügel einer Brille aufgebracht wird. Soll das Gehäuse 3 aufgeschweißt werden, kann es im Bereich der Auflagefläche, mit der es auf dem Bügel aufliegt, mit einer oder mehreren Schweißwarzen versehen werden, was anhand von Figur 19 beispielhaft erläutert wurde.

## Patentansprüche

1. Federscharnier für Brillen mit einem Mittelteil und daran schwenkbar angebrachten Bügeln (27), mit einem mit diesen zusammenwirkenden Federelement (11), einem eine das Scharnierelement (7) und das Federelement (11) aufnehmende Ausnehmung (5) aufweisenden Gehäuse (3), innerhalb dessen das Scharnierelement (7) verlagerbar angeordnet ist, und mit einem in der Ausnehmung (5) angeordneten, zwei Führungsarme (39, 41) aufweisenden Sperrkörper (13), wobei der Sperrkörper (13) einen Aufnahmebereich (17) und das Gehäuse (3) einen Verformungsbereich (19) aufweist, der in den Aufnahmebereich (17) verlagerbar ist und die Führungsarme (39,41) der Führung des Scharnierelements (7) dienen, **dadurch gekennzeichnet, dass** der Aufnahmebereich (17) zwischen den Führungsarmen (39, 41) des Sperrkörpers (13) ausgebildet ist, sodass ein Verdrehen und ein Herausziehen des Sperrkörpers (13) und damit des Scharnierelements (7) aus der Ausnehmung (5) heraus durch die Führungsarme (39, 41) und durch die Vorderseite (59) des Sperrkörpers (13) verhindert werden.

2. Federscharnier nach Anspruch 1, **dadurch gekennzeichnet, dass** der Verformungsbereich (19) durch mindestens einen Wandbereich des Gehäuses (3) gebildet wird, der mittels eines Werkzeugs (21) plastisch verformbar ist.

3. Federscharnier nach Anspruch 2, **dadurch gekennzeichnet, dass** der Wandbereich geschlossen ist.

4. Federscharnier nach Anspruch 2, **dadurch gekennzeichnet, dass** der Wandbereich durch den Rand eines in das Gehäuse (3) eingebrachten Lochs gebildet wird.

5. Federscharnier nach einem der vorhergehenden Ansprüche, **dadurch gekennzeichnet, dass** der Verformungsbereich (19) zwei plastisch verformbare Wandbereiche des Gehäuses (3) umfasst.

6. Federscharnier nach einem der vorhergehenden Ansprüche, **dadurch gekennzeichnet, dass** der plastisch verformbare Wandbereich des Gehäuses (3) dünner ist als die übrige Wandung (47) des Gehäuses (3).

7. Federscharnier nach einem der vorhergehenden Ansprüche 2-6, **dadurch gekennzeichnet, dass** das Werkzeug (21) einen Dorn (23) umfasst.

8. Federscharnier nach einem der vorhergehenden Ansprüche, **dadurch gekennzeichnet, dass** der Sperrkörper (13) zwei Laufflächen (51, 53) aufweist.

9. Federscharnier nach Anspruch 8, **dadurch gekennzeichnet, dass** die Laufflächen (51,53) des Sperrkörpers (13) durch eine Materialbrücke (B) miteinander verbindbar sind.

10. Federscharnier nach einem der vorhergehenden Ansprüche, **dadurch gekennzeichnet, dass** der Sperrkörper (13) mindestens eine Führungsfläche (F1;F2) aufweist, die mit dem Scharnierelement (7) zusammenwirkt.

11. Federscharnier nach Anspruch 10, **dadurch gekennzeichnet, dass** der Sperrkörper (13) zwei in einem Abstand zueinander angeordnete Führungsflächen (F1;F2) aufweist, zwischen denen das Scharnierelement (7) angeordnet ist.

## Claims

1. A spring hinge for spectacles having a center piece and temples (27) fitted pivotably thereto, having a spring element (11) cooperating with said temples, a housing (3) having a recess (5) receiving the hinge element (7) and the spring element (11), within which housing the hinge element (7) is displaceably disposed, and having a locking body (13) with two guide arms (39, 41), the locking body (13) being disposed in the recess (5) and having a receiving region (17) and the housing (3) having a deformation region (19) which is displaceable into the receiving region (17), and the guide arms (39, 41) serving to guide the hinge element (7) **characterized in that** the receiving region (17) is formed between the guide arms (39, 41) of the locking body (13) such that the locking body (13), and hence the hinge element (7), is prevented by means of the guide arms (39, 41) and the front side (59) of the locking body (13) from being twisted and from being pulled out of the recess (5).

2. The spring hinge according to claim 1, **characterized in that** the deformation region (19) is formed by at least one wall region of the housing (3) which is plastically deformable by means of a tool (21).

3. The spring hinge according to claim 2, **characterized in that** the wall region is closed.

4. The spring hinge according to claim 2, **characterized in that** the wall region is formed by the rim of a hole made in the housing (3).

5. The spring hinge according to one of the preceding claims, **characterized in that** the deformation region (19) comprises two plastically deformable wall regions of the housing (3).

6. The spring hinge according to one of the preceding claims, **characterized in that** the plastically deformable wall region of the housing (3) is thinner than the rest of the wall (47) of the housing (3).

7. The spring hinge according to one of the preceding claims 2 to 6, **characterized in that** the tool (21) comprises a mandrel (23).

8. The spring hinge according to one of the preceding claims, **characterized in that** the locking body (13) has two running surfaces (51, 53).

9. The spring hinge according to claim 8, **characterized in that** the running surfaces (51, 53) of the locking body (13) can be mutually connected by a material bridge (B).

10. The spring hinge according to one of the preceding claims, **characterized in that** the locking body (13) has at least one guide surface (F1; F2), which cooperates with the hinge element (7).

11. The spring hinge according to claim 10, **characterized in that** the locking body (13) has two mutually spaced guide surfaces (F1; F2), between which the hinge element (7) is disposed.

## Revendications

1. Charnière à ressort pour lunettes avec une partie centrale et des branches (27) montées-y de manière à pouvoir pivoter, comprenant un élément ressort (11) coopérant avec lesdites branches, un boîtier (3) présentant un évidement (5) recevant l'élément charnière (7) et l'élément ressort (11), à l'intérieur duquel l'élément charnière (7) est disposé de manière déplaçable, et un corps de blocage (13) disposé dans l'évidement (5), présentant deux bras de guidage (39, 41), le corps de blocage (13) présentant une zone de logement (17) et le boîtier (3) une zone de déformation (19) qui peut se déplacer dans la zone de logement (17) et les bras de guidage (39, 41) servant au guidage de l'élément charnière (7), **caractérisée en ce que** la zone de logement (17) est formée entre les bras de guidage (39, 41) du corps de blocage (13), de telle manière que les bras de guidage (39, 41) et le côté avant (59) du corps de blocage (13) empêchent la rotation et la sortie du corps de blocage (13) et, par conséquent, de l'élément charnière (7), hors de l'évidement (5).

2. Charnière à ressort selon la revendication 1, **caractérisée en ce que** la zone de déformation (19) est formée par au moins une zone de paroi du boîtier (3) qui est déformable plastiquement au moyen d'un outil (21).

3. Charnière à ressort selon la revendication 2, **caractérisée en ce que** la zone de paroi est fermée.

4. Charnière à ressort selon la revendication 2, **caractérisée en ce que** la zone de paroi est formée par le bord d'un trou ménagé dans le boîtier (3).

5. Charnière à ressort selon l'une des revendications précédentes, **caractérisée en ce que** la zone de déformation (19) comprend deux zones de paroi du boîtier (3) déformables plastiquement.

6. Charnière à ressort selon l'une des revendications précédentes, **caractérisée en ce que** la zone de paroi déformable plastiquement du boîtier (3) est plus mince que le reste de la paroi (47) du boîtier (3).

7. Charnière à ressort selon l'une des revendications précédentes 2 à 6, **caractérisée en ce que** l'outil (21) comprend un mandrin (23).

8. Charnière à ressort selon l'une des revendications précédentes, **caractérisée en ce que** le corps de blocage (13) présente deux surfaces de roulement (51, 53).

9. Charnière à ressort selon la revendication 8, **caractérisée en ce que** les surfaces de roulement (51, 53) du corps de blocage (13) peuvent être reliées entre elles par un pont de matière (B).

10. Charnière à ressort selon l'une des revendications précédentes, **caractérisée en ce que** le corps de blocage (13) présente au moins une surface de guidage (F1 ; F2) qui coopère avec l'élément charnière (7).

11. Charnière à ressort selon la revendication 10, **caractérisée en ce que** le corps de blocage (13) présente deux surfaces de guidage (F1 ; F2) disposées à distance l'une de l'autre, entre lesquelles l'élément charnière (7) est disposé.
